# EUROPEAN PATENT APPLICATION

(11) **EP 1 197 929 A2**
(43) Date of publication of application: **17.04.2002**
(21) Application number: 01308187.2
(22) Date of filing: 26.09.2001
(51) Int. Cl.: G07F 7/10, G06F 17/60

(54) **Formatted electronic transactions**

(30) Priority: 13.10.2000 GB 0025198; 02.03.2001 GB 0105266
(71) Applicant: Nokia Corporation, 02150 Espoo (FI)
(72) Inventor: Hyyppä, Petri, 90520 Oulu (FI); Markkanen, Panu, 90540 Oulu (FI); Piikivi, Lauri, 90230 Oulu (FI); Cofta, Piotr, 00180 Helsinki (FI)
(74) Representative: Ruuskanen, Juha-Pekka

(57) **Abstract**

A method of exchanging transaction information comprises the steps wherein a data entity is generated based on an electronic data card format, transaction content data is included in the data entity, and the data entity is transported between a user equipment (1) and another party (12) of the transaction.

## Description

The present invention relates the electronic transactions between parties, and in particular, but not exclusively, to exchange of transactions information between the parties.

Various user equipment such as computers (fixed or portable) mobile telephones, personal data assistants or organisers, pagers and so on are known by the skilled person. A user equipment can be defined as a means that the user may use for different tasks such as for processing information and/or for communication. A mobile user equipment referred to as mobile station can be defined as means that is capable of communication via a wireless interface with another device such as a base station of a mobile telecommunication network or any other station. Such a mobile user equipment can be adapted for voice, text message or data communication via the wireless interface.

The inventors have found that that user equipment could also be used for exchange of information that associates with electronic transactions between two or more parties. The possible transactions could include, without restricting to these, transactions such as ordering of goods and/or services, transactions that associate with payment of purchased goods and/or services, provision of an electronic receipt, ticket or other authorisation to do an act, or transactions associated with banking or other financial services and so on. The mobile user equipment could also be used for exchange and/or storage of confidential information such as personal identification data, passport data and so on. It shall thus be appreciated that in this specification the term 'transaction' is not restricted to commercial transactions between parties but instead the term refers to exchange of any information that can be said to be confidential or personal.

Conventionally means such as a ticket, a receipt, a voucher, a credit card slip and so on have been printed on a piece of paper, card, plastic and so on. The more modern approach is based on use of electronic communication media for the exchange of transaction information.

To enable electronic transactions between two entities a common transaction mechanism is required. In general term, a typical transaction mechanism can be defined to comprise features such as the communication media between the parties of the electronic transaction. Transaction protocols and parameters, and content transfer and presentation formats need typically also be defined. Security mechanisms and other functions may also be required for an electronic transaction between the parties.

A development in the field of electronic data processing has lead to arrangements in which transaction information may be distributed and otherwise handled in electronic or digitised form. Data regarding the digital or electronic transactions can be transported over a data network, such as the Internet to a destination terminal, e.g. an internet enabled computer. The data associated with the transaction should be such that when the data is received e.g. at a user equipment, the data can be identified to constitute of transaction data. The received data should also contain information that is required to enable use of the electronic transaction data for the original purpose thereof, such as for authorising a credit card payment, provision of a receipt or obtaining a permit to accomplish an act. For example, if the transaction mechanism is for provision of a ticket for a concert, the ticket should typically indicate the date and time as well as the venue of the concert and possibly a reference number and/or a code number or other safety checks. If the transaction mechanism is for the provision of a receipt, information such as the subject of the receipt, date of the receipt, method of payment and so on may need be provided with the receipt. Some authorisation data may also be required in association with credit or debit card or other financial transactions.

However, the inventors feel that the logistics in current systems for distributing and/or using electronic transactions e.g. electronic tickets or receipts is bothersome. Although it is possible to exchange transaction data over the data network such as the Internet, the delivery e.g. of sold tickets or receipts to the customers who are not at home, office or otherwise not able to access the Internet may still cause difficulties.

A possibility could be to deliver and store transaction data to mobile user devices, such as mobile phones, personal data assistants or organisers and so on. The delivery could be done over an air interface between the other party and the mobile user equipment. However, this approach would probably require extensive modifications to be made on the existing mobile user devices and/or the interfaces thereof. The consumers may not be ready to pay for the costs of these modifications. Some of the mobile user devices may also have limitations regarding their capability to incorporate new features and/or additional data processing and storage facilities. This may also prevent the use thereof as a means for delivering authorisations to consumers.

It may also happen that a person who has received transaction data from another party may wish to forward the data to a third party.

What is needed here is a way to exchange transaction information between parties of an electronic transaction that does not require substantial modifications to user equipment.

Embodiments of the present invention aim to address this need.

According to one aspect of the present invention, there is provided a method of exchanging transaction information comprising the steps of generating a data entity based on an electronic data card format, and transporting the data entity via communication means, wherein transaction content data is transported by means of the data entity between a user equipment and another party of the transaction.

In a more specific embodiment transaction content data associated with the transaction is inserted in at least one predefined data field of the data entity. Transaction content data may be mapped between a data field of the data entity and a data storage means in a predefined manner.

The electronic data card format may be based on formats such as an electronic business card format, an electronic calendar format or the Electronic Commerce Modelling Language.

The user equipment may detect that the received data entity associates with a transaction. The user equipment may transmit information associated with the transaction to a third party based on a data entity received at the user equipment. The data entity may be received at a first user equipment, and then forwarded from the first user equipment to a second user equipment.

At least a part of the communication may occur via a wireless interface.

According to another aspect of the present invention there is provided a user equipment comprising transaction processor means adapted for processing a data entity that is based on an electronic data card format, and communication means for communication of transaction information, the user equipment being arranged to communicate transaction content data by means of the data entity with another party of the transaction.

According to another aspect of the present invention there is provided an electronic transaction system, comprising a user equipment provided with transaction processor means for processing transaction information, and means for communicating a data entity that is based on an electronic data card format between the user equipment and another party, wherein transaction content data associated with a transaction is arranged to be transported by means of the data entity between the user equipment and said other party.

The embodiments of the invention may provide a solution for exchange and/or use of transaction data that does not necessarily require substantial modifications or additional hardware to user equipment. Transaction data may be exchanged over existing communication media based on existing communications standards and/or protocols and/or formats. The embodiments may provide increased security for transaction data exchange procedures.

For better understanding of the present invention, reference will now be made by way of example to the accompanying drawings in which:
Figure 1 shows an embodiment of the present invention;
Figure 2 illustrates system architecture for an embodiment;
Figure 3 is a flowchart illustrating the operation in accordance with an embodiment of the present invention; and
Figure 4 shows examples of possible uses of the embodiments.

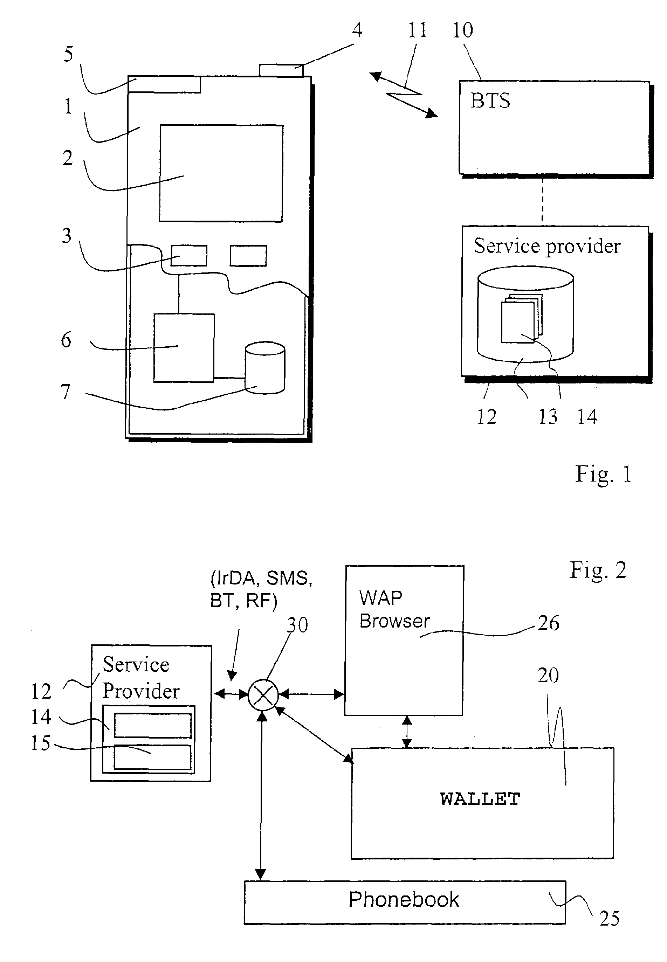

Figure 1 shows a user device that may be used in the embodiments of the present invention. More particularly, Figure 1 shows a partially sectioned mobile station 1 that may be used for communication over a wireless interface 11 with a transceiver element 10 of a mobile communication network. The transceiver elements and other components of the mobile communication network are known by the skilled person and are thus not shown in more detail than by block 10 for clarity reasons.

The mobile station 1 may be provided with user interface means comprising a display 2 and input means. The skilled person is familiar with the user interface of a mobile station and therefore these will not be described in more detail herein. It is sufficient to note that the input means may be formed by control buttons 3 or they may include e.g. voice activation or touch screen means and so on. The mobile station 1 may also be provided with communication interface means such as antenna means for communication with the transceiver entity 10. The antenna means may comprise an external antenna element 4, or then built-in or integrated antenna means may be used. It should be appreciated that antenna means are not an essential for the operation of the present invention.

The mobile station 1 is adapted to facilitate use thereof for electronic transactions and for exchange of confidential user information between the mobile station and a remote party. For example, the user of the mobile station 1 may pay for various goods and/or services by means of the mobile station 1 or access various banking or other financial services by the mobile station 1. To enable this the mobile station 1 may be provided with a credit card type transaction facility or account means wherein the user may load money. The balance can then be deducted from the account means whenever a payment is made. The mobile station 1 may also be used for transactions that associate with negotiating a purchase of goods and/or services, receiving a receipt of a purchase or with any other operation where data content associated with a transaction needs to be exchanged between the user and another party. Examples of other possibilities include use of the mobile station 1 for transactions that associate betting or insurance services. Possible transaction data processing means will be described in more detail with reference to Figure 2 after the following description of the other elements of the Figure 1 arrangement.

The mobile station 1 is shown to comprise a transaction processor function 6 and a transaction data storage means 7. The processor function 6 is for processing data and/or controlling reception and/or transmission of transaction data from and/or to the other parties. The processor function 6 may be integrated with at least one other processor function of the mobile station 1 or may be adapted to process data that associates with electronic transactions only. The data storage means 7 may also be either integrated with at least one other function of the mobile station 1 or be assigned solely for storage of data that associates with the electronic transactions. Separation of the transaction functions from other functions of the mobile station 1 may be preferred e.g. for security or usability reasons.

In Figure 1 the other party of a transaction is shown to comprise an entity 12 that is referred to by the term 'service provider'. The service provider 12 shall be understood to represent any party that may exchange transaction data with the mobile station 1. In a practical implementation the service provider 12 may comprise a server 13 that is adapted for provision of commercial or non-commercial services for the user of the mobile station 1.

If the mobile station 1 subscribes to a mobile communication network 10, the elements of this network may provide the communication means between the service provider 12 and the mobile station 1. Thus the user may access the services provided by the service provider entity 12 via the communication network. Messages may be transmitted between the mobile station 1 and the service provider 12 based on any appropriate transport system. Examples of these include Short Message Service (SMS), Wireless Application Protocol (WAP) and Internet protocol (IP).

The service provider entity 12 may comprise a site 14 that is implemented based on the Wireless Markup Language (WML) used for applications that are based on use of the wireless application protocol (WAP). However, such a site may also be based on any other appropriate means, such as any other markup language. The mobile station 1 may load transaction data from a page of the site. The user may be enabled to pull i.e. fetch or download a document such as an electronic order form, questionnaire, receipt and so on from the site 14. Alternatively the service provider entity 12 may push transaction data towards the user e.g. by means of a server 13.

Figure 2 discloses a possible architecture for a system providing transaction processing means. The transaction processing means are referred to herein by the term 'electronic wallet'. The electronic wallet function is designated by block 20.

An electronic transaction handling facility can be implemented at the user device 1 by adding a transaction handling routine into the data card recognition software running in the processor means 6 of the user device 1. The handling routine may be adapted to detect that the incoming data entity is a data entity that contains transaction information. The handling routine may then route the data entity to an appropriate processor or storage means. In Figure 2 this software could be implemented in a splitter 30. The data handling routine may be adapted to detect that the incoming data entity contains information associated with the wallet function 20 and/or transactions and to route the data entity to an appropriate data storage means or processor.

The wallet block 20 may be a self standing application and is adapted to understand the data card format. The communications can be directed directly from the splitter 30 to wallet block 20, as indicated by an arrow between blocks 30 and 20. The splitter 30 may route the transaction messages directly to wallet. The wallet 20 may then show information to user on a display, ask the user to fill in data, accept data and so on.

Browser block 26 provided in the mobile station is also shown. The browser 26 may be used by the user for communication with the service provider server. The user may thus use the browser to pull i.e. download e.g. an order form, receipt or other transaction data from a service provider server or similar source. The user equipment may e.g. fetch an order form from the server, fill it in and transmit the completed order form back to the server to order goods specified in the form. Another example is download of bank account information (e.g. a statement) from a server of a bank. The user may also use the browser for searching possible new service providers, goods and/or services he may be interested in. The user may use the browser 26 to download a web page in response to selection of an indicator displayed to him/her on the display screen of the user equipment. The procedure of downloading information from a remote database is known and will thus not be explained in more detail.

Figure 2 shows a service provider function block 12. The service provider function is shown to include a further block 14 that designates a form for use in the transaction that the user may download by means of the browser function 26. The form is shown to include data fields 15 to be filled in by the user. Required transaction information may include, for example, the name and address of the user, credit card number, passport number, telephone number, personal identity code and so on. This information may be stored in the wallet block 20.

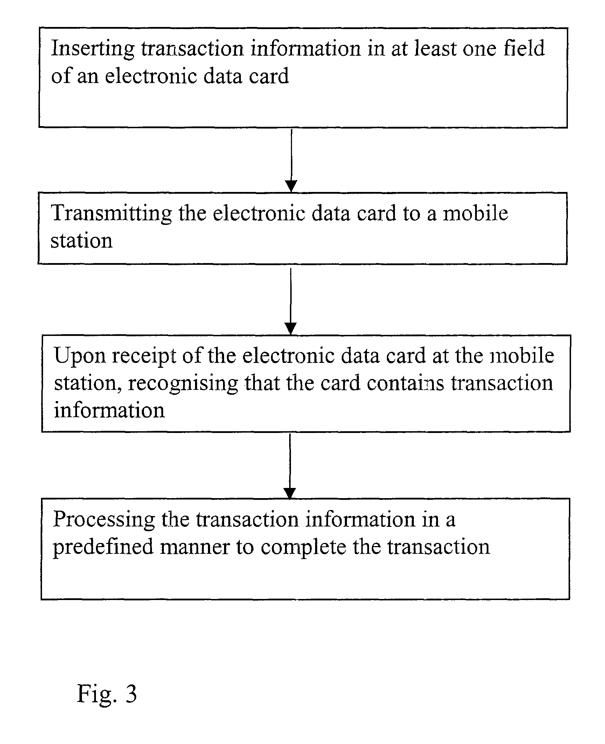

Referring now also to the flowchart of Figure 3, operation in accordance with an embodiment of the present invention will be described in more detail. The example relates to exchange of transaction information between the mobile station 1 and a server of the service provider by means of a standardised data entity that will be referred to in the following as an electronic data card.

In the Figure 3 example the service provider 12 provides the mobile station 1 with transaction data such as a receipt based on an electronic data card content type. The transaction information can be transported to the mobile station 1 by adding the data on predefined data field of the data card.

An example of the electronic data card content type is an electronic business card. The electronic business card is sometimes also referred to as digital business card content type. The electronic business card is known by the skilled person. The electronic business cards are designed to be used instead of conventional business cards and may be used for transmitting and interchanging contact information and other information regarding a person or a group of persons to a user terminal. The user terminal may be an Internet enabled computer terminal, a mobile station, hand held organiser, personal information manager, personal data assistant, pager, fax, office equipment, and so on. That is, the user terminal may be any device capable of processing data in electronic form. The destination terminal may also store the information it received on the electronic business card. The data that may be transmitted on conventional electronic business cards may include simple text, and also elements like pictures, company logos, Web addresses, and so on. The transaction data can be transported through typical electronic business card channels.

An example of the electronic business card applications available for the public is marketed under name 'vCard'. For example, in the WAP the vCard content type electronic business card is a mandatory feature and may thus be readily used also for exchange of transaction data. The vCard may be implemented on a WAP/WWW page as an object.

Thus, e.g. when generating the data entity to be transported from the service provider server to the mobile station 1, the service provider server may fill in the appropriate fields of the electronic data card by inserting data into appropriate fields. The transaction data may be inserted in the fields e.g. in the following manner:

| **Field** | **Content** | **Example** |
|---|---|---|
| NAME | Name of the user plus any other identity information that needs to be known | "John Smith" |
| Content | A data field including e.g. credit card or receipt data | "Card No: xyz"; "expiry date: x"; " "receipt: A has paid X for Y on date Z". |
| Address | Delivery address information | "Street n, city xyz" |
| KEY | Signature | F4f9hergn7hgsaw7fa 87gUyg8gytv4IuFyt |
| | | |

The main fields, such as 'NAME' and 'Content' may be divided into a plurality of subfields. For example, field 'NAME' may have a subfield for the first name and another subfiled for the last name.

The signature provides additional security for the transaction and against fraudulent use. The digital signature may be based on any appropriate authorisation technique, such as public and/or private keys. The skilled person is aware of these techniques and they will not be explained in more detail herein.

If data is loaded from the data card to a page at the service provider server, the fields of the data card content type can be mapped to the page. Correspondingly, if data is loaded from a page to a data card entity at the service provider server, the fields of the page can be mapped to the data card. A receipt may be pulled by the mobile station by downloading the page containing the receipt or browsing to the page. Another possibility is to push the ticket from the service provider server, i.e. transport the ticket to the mobile station without any request by the user.

Another example of a possible data card entity for the transmission of data between the mobile station and a co-operative device of another party is an electronic data card that is based on the Electronic Commerce Modelling Language (ECML). The ECML can be used in the exchange of purchase related information such as order, payment and receipt information. The EMCL defines also a way how specific field information like names, addresses and credit card information can be formatted and transported in a data communication system.

The above discussed detection is not always necessary. A possibility is that the user device 1 does not recognise that the incoming data card entity associates with a transaction rather than is e.g. a conventional business card. This may occur e.g. when data that indicates that the business card associates with a transaction is lost or missing or when the user equipment is not enabled to recognise that the data contains transaction information. In such occasions the user equipment may store the business card data in a conventional manner to a storage means such as a contact list or in a phonebook 25. When the user opens the storage means he/she notes that transaction information has arrived. The indication of this is e.g. in the above example of a data card that the type parameter shown to the user is "receipt: A has paid X for Y on date Z". The user may then view or otherwise use the received transaction information or tell to the control of the transaction function (e.g. the wallet function) that the business card associates with electronic transactions.

The mobile device 1 may also use the electronic data card format when communicating towards the other party, e.g. a bank. According to an embodiment the mobile station 1 generates an appropriate data card entity that is to be forwarded to the other party. The mobile station 1 may e.g. respond to a transaction message received from the other party or initiate a transaction procedure. For example, if the service provider system comprises is a WAP server, the mobile station 1 may fill in a WAP document based on information received in the data entity such as the vCard. The WAP document is transmitted back to the system 12 by means of the vCard format.

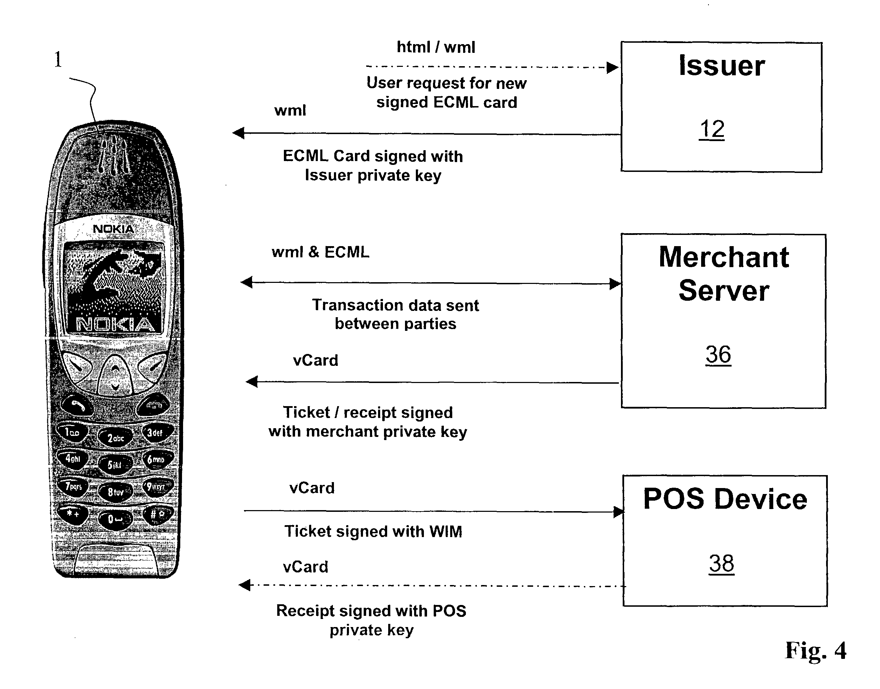

Figure 4 shows further examples wherein transaction data can be exchanged between the mobile user equipment 1 and various other parties by means of a data card format.

The user may request from a service provider 12 for transaction data on a ECML data card. The request may be basd on a markup language message. Examples of various markup languages include, without limiting to these, WML (wireless markup language), HTML (hypertext markup language), and XHTML (extended hypertext markup language). In this example the other party comprises an entity 12 that may issue the requested transaction data, such as a ticket or receipt, and will thus be referred to as the issuer. The issuer 12 may be adapted to utilise an appropriate identification and/or authorisation procedure such as public keys. The issuer may have a public & private key pair for signing the transaction data.

After the authentication and signature assignment procedures the issuer 12 then may issue the requested transaction data card. The data card is subsequently transported to the mobile user equipment 1 over the wireless connection between the mobile station and a station connected to the issuer entity.

In another example also shown by Figure 4 the user wishes to purchase something from a merchant entity 36. In the example, the entity 36 is referred to as a merchant server. While negotiating transaction data is exchanged between the parties. The negotiations may include, for example an inquiry by the user, an offer by the merchant server, an acceptance by the user, payment by the user and a receipt by the merchant. This information may be transported in appropriate fields of the data card between the parties.

In a further example the user has been provided with a receipt, ticket, voucher or similar means that can be used as an authorisation to do an act such as to collect goods at a point of sale (POS) 38. For example, the merchant server 36 may have transmitted the authorisation information to the mobile user equipment 1 by means of an electronic data card. The transmission may be signed with the private key of the merchant. The same data card format may be then used for the communication between the mobile user equipment 1 and the point of sale device 38. The confirmation means may be signed by the user to indicate acceptance and intent and to verify that the user is the person to whom a ticket or receipt was issued. This signature may be based e.g. on the WIM (wireless identity module) that is defined in WAP specifications or other asymmetric key system signature.

The point of sale device 38 may be provided with the merchants public key and it can thus verify any content that has been signed by using that key.

When collecting the purchased goods the user equipment 1 may forward the authorisation further to a server of the point of sale (POS) 38. The point of sale may provide the user equipment with a receipt that the goods have now been collected, the transaction has been completed, and so on. This receipt may be signed by the private key of the point of sale.

Instead of the POS 38 of Figure 4, the user equipment may also communicate with a ticket enabled system. A ticket enabled system is an entity which enables the user of the mobile user equipment 1 to do an act after information that is based on the ticket data is communicated to the device from the mobile user equipment 1. An example of such system is a ticket reader in an entrance gate to an event or location and another example is a ticket reader in a bus, train or other means of transportation. That is, after the purchase and receipt of the electronic ticket, the mobile user equipment 1 may be used to enable access to services by transmitting the electronic ticket or information that is based on the electronic ticket from the mobile station 1 to the system. The transmission may be initiated by the user of the mobile station 1, e.g. by pressing an appropriate control key 3. The authorisation procedure may also be initiated by detection that the mobile station 1 is within the operational range of the ticket enabled system 12. An example of this type of operation will be explained in more detail later.

The ticket enabling system may also comprise another portable device. For example, a doorman may have a personal trusted device (PTD), the arrangement being such that the ticket is "collected" by the doorman from the mobile station 1 in his personal trusted device instead of paper tickets.

The communication between the user equipment 1 and the ticket enabled device may be based on use of similar data card formats as what was used for communication between the user equipment and the issuer 12.

Although not necessary, the issuer 12 and the ticket enabled system, i.e. the system for which the tickets are issued for, may also have a communication media therebetween. The communication media may be used e.g. for transportation of information regarding issued tickets, used tickets and security checks.

The above discusses electronic business card content type, such as vCard and ECML based card formats. However, other similarly designed content types adapted for transportation of user related information in a standardised format are also possible. An example is the so called Bluetooth™ business card. Another example is to transport transaction data in an electronic calendar content type, such as in a data card content type referred to as 'vCal'.

It should be appreciated that whilst embodiments of the present invention have been described in relation to a mobile station communicating via a base station, embodiments of the present invention are applicable to any other suitable type of user equipment that support electronic or digital data cards.

Referring now again to Figure 1, according to a further embodiment the mobile user equipment 1 is provided with a wireless transmitter and/or receiver module 5. The module 5 is not for communication with the base station 10 of the cellular communication system, but is instead for the provision of a local communication link with a co-operative device. In this embodiment the data entities are not transmitted between the user equipment 1 and the service provider via the communication network 10. Instead, the communication occurs via local wireless links.

The module 5 may be based on use of infrared links, short range radio links, and so on. The infrared link may be based e.g. on the IrDA. The IrDA is a standard defined by Infrared Data Association. The short range radio link may be based e.g. on the Bluetooth™ protocol. Other examples of the short range wireless interfaces are the ones based on technology used for the so called contactless smart cards or proximity. A short range link for proximity cards is defined e.g. by the International Standardisation Organisation (ISO) specification No. ISO 14443.

The term Bluetooth™ refers to a technology specification by Bluetooth special interest group (SIG) for small factor, low-cost, short range radio links (SRRL) between various devices provided with a Bluetooth™ wireless modules. A feature of the Bluetooth™ is that whenever two devices provided with a Bluetooth™ module each are within each others coverage area, one of the modules may detect the existence of the other module, where after they may establish a connection between them. This may be a useful feature e.g. in the context of using mobile device 1 as a mobile electronic wallet or as an authorisation means, e.g. when entering a buss that is provided with a Bluetooth™ enabled ticket reader.

In addition to transporting the data card entity between a service provider and a mobile user equipment, the system may also be adapted to allow exchange of transaction data between any devices, such as from a first mobile user device to a second mobile user device. This may be a useful option e.g. when a person wants to pass his tickets or other authorisation to do an act to another person. To prevent fraudulent use of a ticket more than once, the ticket data is preferably removed from the storage means of the first device as it is forwarded to the second device. However, this is not always necessary. For example, a ticket enabled system may be adapted to accept the ticket only once, e.g. based on the reference numeral thereof.

When information is transmitted between different devices, it may be necessary to synchronise the information contained in the fields of the data entity so that the receiving device may use the information.

It is possible to display visual messages that associate with the transaction data by means of the display 2.

In the preferred embodiments no printed documents are needed for the exchange of electronic transaction data. However, it is also possible that transaction data is transported to a printer device. After this a paper print is prepared based on the transaction information.

The arrangement may be such that those digital business card-capable systems that are not enabled to or do not need to handle transaction information can transmit the electronic data cards without any modification thereof. That is, the non-enabled elements of the communication system may ignore the transaction information contained in the electronic data card or the transaction information will be transparent for them.

It is also noted herein that while the above describes exemplifying embodiments of the invention, there are several variations and modifications which may be made to the disclosed solution without departing from the scope of the present invention as defined in the appended claims.

## Claims

1. A method of exchanging transaction information comprising the steps of generating a data entity based on an electronic data card format, and transporting the data entity via communication means, **characterised in that** transaction content data is transported by means of the data entity between a user equipment (1) and another party (12, 36, 38) of the transaction.

2. A method as claimed in claim 1, wherein the transaction content data is inserted in at least one predefined data field of the data entity.

3. A method as claimed in any preceding claim, wherein the electronic data card format is based on an electronic business card format or electronic calendar format.

4. A method as claimed in claim 1 or 2, wherein the electronic data card format is based on the Electronic Commerce Modelling Language.

5. A method as claimed in any preceding claim, comprising communication of information regarding the presentation format of the transaction content data.

6. A method as claimed in any preceding claim, comprising transmitting the data entity from the user equipment (1).

7. A method as claimed in any of claims 1 to 5, comprising receiving the data entity at the user equipment (1).

8. A method as claimed in claim 7, comprising detecting that the data entity associates with an transaction.

9. A method as claimed in claim 7 or 8, wherein the user equipment (1) transmits information associated with the transaction to a third party (36,38) based on the data entity received at the user equipment.

10. A method as claimed in any preceding claim, wherein at least a part of the communication between the user equipment (1) and the other party (12, 36, 38) occurs via a wireless interface.

11. A method as claimed in claim 10, wherein the wireless interface is provided between the user equipment (1) and a station (10) of a cellular communication system.

12. A method as claimed in any preceding claim, wherein the user equipment (1) communicates over a local wireless interface with a co-operative device.

13. A method as claimed in claim 12, wherein the local wireless interface is based on an infrared link.

14. A method as claimed in claim 15, wherein the local wireless interface is based on a short range radio link.

15. A method as claimed in claim 12, wherein the local wireless interface is based on a proximity card link.

16. A method as claimed in any preceding claim, wherein information associated with the transaction is stored in a storage means (7) of the user equipment.

17. A method as claimed in any of claims 2 to 16, wherein the at least one data field is ignored by devices not enabled to detect information associated with the transaction.

18. A method as claimed in any preceding claim, wherein information associated with the transaction includes a digital signature.

19. A method as claimed in any preceding claim, comprising receiving the data entity at a first user equipment, and forwarding the data entity from the first user equipment to a second user equipment.

20. A method as claimed in any preceding claim, comprising data transportation based on Wireless Application Protocol (WAP) or Internet Protocol (IP).

21. A method as claimed in any preceding claim, wherein transaction content data is mapped between a data field of the data entity and a data storage means in a predefined manner.

22. A method as claimed in any preceding claim, wherein the user equipment comprises a mobile station (1).

23. A user equipment (1) comprising transaction processor means (6) adapted for processing a data entity that is based on an electronic data card format, and communication means (4,5) for communication of transaction information, **characterised in that** the user equipment (1) is arranged to communicate transaction content data by means of the data entity with another party (12, 36, 38) of the transaction.

24. A user equipment as claimed in claim 23, wherein the communication means provide communication over a wireless interface.

25. A user equipment as claimed in claim 23 or 24 being adapted to recognise that a received data entity contains transaction information.

26. A user equipment as claimed in any of claims 23 to 25, wherein the communication means comprise first means (4) for provision of a first type of communication interface and second means (5) for provision of a second type of communication interface.

27. A user equipment as claimed in any of claims 23 to 26 being adapted for transmission of transaction information to a third party (36, 38) based on a data entity that is based on an electronic data card format and that is received from a service provider (12).

28. An electronic transaction system, comprising user equipment (1) provided with transaction processor means (7) for processing transaction information, and means for communicating a data entity that is based on an electronic data card format between the user equipment (1) and another party (12, 36, 38), **characterised in that** transaction content data associated with a transaction is arranged to be transported by means of the data entity between the user equipment (1) and said other party (12, 36, 38).
